# FASCICULE DE BREVET EUROPEEN

(11) **EP 0 932 244 B1**
(45) Date de publication et mention de la délivrance du brevet: **20.10.2004**
(21) Numéro de dépôt: 99400162.6
(22) Date de dépôt: 25.01.1999
(51) Int. Cl.: H02K 21/04, H02K 1/27, H02K 16/02

(54) **Machine électrique à double excitation, et notamment alternateur de véhicule automobile**
Elektrische Maschine mit doppelter Erregung, und insbesondere Fahrzeuggenerator
Electric machine with double excitation, and in particular vehicle alternator

(30) Priorité: 26.01.1998 FR 9800781
(43) Date de publication de la demande: 28.07.1999
(73) Titulaire: VALEO EQUIPEMENTS ELECTRIQUES MOTEUR, 94000 Créteil (FR)
(72) Inventeur: Akemakou, Dokou Antoine, 94400 Vitry sur Seine (FR)
(74) Mandataire: Le Forestier, Eric

(56) Documents cités:
- WO-A-96/30992
- DE-C- 4 139 843
- PATENT ABSTRACTS OF JAPAN vol. 018, no. 109 (E-1513), 22 février 1994 (1994-02-22) & JP 05 304752 A (FUJI ELECTRIC CO LTD), 16 novembre 1993 (1993-11-16)
- JUN OYAMA ET AL: "CHARACTERISTICS OF HALF-WAVE RECTIFIED BRUSHLESS SYNCHRONOUS MOTOR WITH PERMANENT MAGNETS" PROCEEDINGS OF THE EUROPEAN CONFERENCE ON POWER ELECTRONICS AND APPLICATIONS. (EPE), AACHEN, 9 - 12 OCTOBER, 1989, vol. VOL. 3, no. CONF. 3, 9 octobre 1989 (1989-10-09), pages 1513-1517, XP000143582 LEONHARD W;HOLTZ J; SKUDELNY H C

## Description

La présente invention a trait d'une façon générale aux machines tournantes telles que les alternateurs pour véhicules automobiles.

La génératrice mono- ou polyphasée que constitue un alternateur classique de véhicule automobile comporte généralement un stator à l'intérieur duquel tourne un rotor pourvu d'un bobinage d'excitation. Ce bobinage est alimenté par des balais en contact avec deux bagues collectrices prévues sur une partie en saillie de l'arbre du rotor.

On connaît déjà notamment par EP-A-0 707 374 et WO 96/30992 des machines tournantes dans lesquelles, en vue notamment d'accroître leur rendement, le champ d'excitation du rotor est réalisé à la fois par des aimants permanents et par des bobines (on parle en général d'excitation « mixte »), et dans lesquelles on contrôle le courant délivré par l'induit à l'aide de moyens de commutation au niveau des bobinages d'excitation, ces moyens de commutation permettant d'inverser sélectivement le sens de l'excitation pour diminuer, voire sensiblement annuler, le flux des aimants.

Cette nécessité d'inverser le sens du courant d'excitation impose d'utiliser un pont de commutation à semi-conducteurs dit en « H », dont le coût est élevé et qui grève donc le prix de revient de la machine.

La présente invention vise à pallier ces inconvénients et à proposer une machine, en particulier une machine tournante telle qu'un alternateur, qui possède une excitation mixte et dans laquelle la régulation du courant délivré puisse s'effectuer en jouant sur une excitation par bobines qui s'effectue de manière unidirectionnelle, et en particulier en faisant varier l'excitation par les bobines entre une valeur essentiellement nulle et une valeur maximale pour délivrer une énergie variant dans une plage donnée. Ainsi l'invention vise notamment à réaliser une excitation mixte dans des cas où il n'est pas nécessaire de disposer d'une excitation qui varie entre une valeur nulle et une valeur maximale, mais où une excitation entre une valeur minimale non nulle et une valeur maximale est suffisante.

Un autre objet essentiel de l'invention, dans une telle machine, est de pouvoir, pour un nombre donné de pôles de rotor, diminuer le nombre d'aimants nécessaires tout en conservant un niveau d'excitation par aimants et un niveau d'excitation par bobines qui soient comparables l'un par rapport à l'autre.

Ainsi l'invention propose une machine électrique à commutation de flux, comportant un stator et un rotor, le stator comportant au moins un bobinage d'induit logé dans au moins une paire d'encoches, le rotor comportant des moyens aptes à sélectivement établir des circuits magnétiques fermés passant autour des brins du ou des bobinages d'induit, caractérisée en ce que lesdits moyens comportent au moins un aimant permanent d'excitation apte à établir un flux magnétique dans une direction circonférentielle du rotor, et au moins un bobinage d'excitation apte à établir localement un flux magnétique réglable dans la même direction circonférentielle que celle du flux produit par le ou les aimants, en ce que le ou chaque aimant est reçu dans une première partie de rotor définissant une première paire de pôles du rotor, en ce que le ou les bobinages sont placés dans une seconde partie de rotor définissant une seconde paire de pôles du rotor, et en ce que lesdites parties de rotor sont séparées les unes des autres par des zones qui sont essentiellement non magnétiquement conductrices.

Des aspects préférés, mais non limitatifs, de la machine selon l'invention sont les suivants :
- la ou chaque seconde partie de rotor possède une pièce ferromagnétique ayant la forme générale d'un « U » dont deux branches définissent les deux pôles, et recevant au moins un bobinage d'excitation.
- la ou chaque seconde partie de rotor possède un bobinage d'excitation unique entourant une base de la pièce en « U » réunissant lesdites branches et apte à créer un flux magnétique dans une direction générale circonférentielle de même sens que le flux magnétique engendré par le ou chaque aimant.
- la ou chaque seconde partie de rotor possède deux bobinages d'excitation entourant lesdites branches de la pièce en «U» et aptes à créer des flux magnétiques dirigés l'un vers l'intérieur, l'autre vers l'extérieur du rotor.
- le rotor comporte le long de sa périphérie une alternance de premières parties et de secondes parties (21).
- lesdites premières parties de rotor possèdent chacune deux pièces ferromagnétiques s'étendant de part et d'autre de l'aimant associé.
- lesdits pièces ferromagnétiques des premières parties du rotor appartiennent à une carcasse unique.
- les zones non magnétiquement conductrices sont constituées par des espaces d'air.
- les zones non magnétiquement conductrices sont constituées par un matériau non magnétiquement conducteur tel qu'une matière plastique.

L'invention propose en outre une machine telle que définie ci-dessus, qui constitue un alternateur de véhicule automobile.

D'autres aspects, buts et avantages de la présente invention apparaîtront mieux à la lecture de la description détaillée suivante de formes de réalisation préférées de celle-ci, donnée à titre d'exemple et faite en référence aux dessins annexés, sur lesquels :
la figure 1a est une vue schématique sous forme développée d'un ensemble de rotor et de stator d'une machine tournante selon une première forme de réalisation de l'invention, dans un état de non-excitation des bobinages inducteurs,
la figure 1b est une vue semblable à la figure 1, dans un état d'excitation des bobinages inducteurs,
la figure 2 est une vue schématique sous forme développée d'un ensemble de rotor et de stator d'une machine tournante selon une deuxième forme de réalisation de l'invention, dans un état d'excitation des bobinages inducteurs, et
la figure 3 est une vue schématique en coupe transversale d'une forme de réalisation concrète d'un ensemble de rotor et de stator réalisé conformément aux figures 1a et 1b.

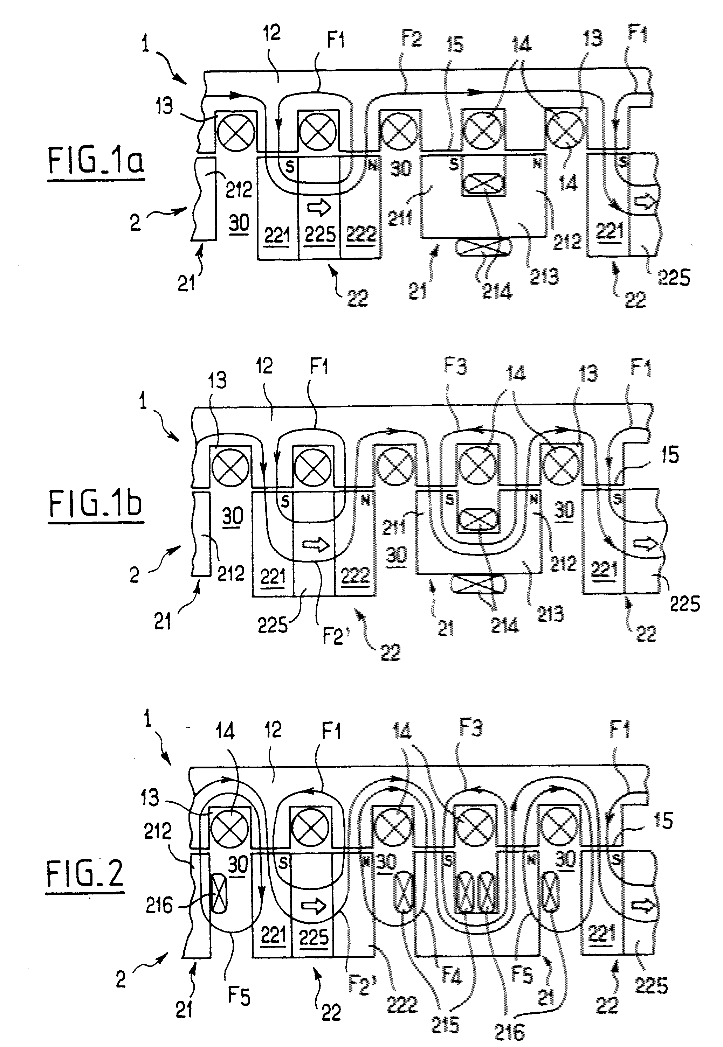

En référence tout d'abord aux figures 1a et 1b, on a représenté schématiquement sous forme développée une partie d'un stator 1 et de la partie homologue d'un rotor 2 pouvant équiper une machine électrique, mono- ou polyphasée selon l'invention, telle qu'un alternateur.

Le stator 1 possède une carcasse 12 définissant une structure annulaire continue à la périphérie intérieure de laquelle est ménagée une pluralité d'encoches 13 qui reçoivent des brins de bobinages d'induit 14, de façon entièrement classique en soi.

Ces encoches 13 sont en nombre pair et sont régulièrement réparties angulairement, en laissant entre elles des pôles 15.

Le rotor 2 est défini par une succession de structures ou cellules individuelles, magnétiquement séparées. Ces structures comprennent une première structure ferromagnétique 21, en « U », avec deux branches 211, 212 dont les extrémités libres définissent deux pôles saillants extérieurs, dont le pas angulaire est égal à celui des pôles 15 du rotor dans le cas d'une machine monophasée, et une base 213.

Autour de la base 213 est enroulé un bobinage d'excitation 214, ce bobinage étant raccordé à une source de tension d'excitation (non représentée) de manière à engendrer en son sein un flux magnétique dirigé de la gauche vers la droite sur les figures 1a et 1b.

On prévoit de préférence plusieurs des structures en « U » précitées, régulièrement espacées angulairement.

Entre ces structures en « U » 21 sont intercalées des structures à aimant permanent 22, en nombre identique, qui comprennent chacune un aimant permanent 225 emprisonné entre deux pièces ferromagnétiques 221, 222 dont les faces tournées vers le stator constituent des pôles, les pôles des structures en « U » 211 et ceux des pièces 221, 222 étant régulièrement à la périphérie extérieure du rotor.

Dans le cas d'une machine triphasée, le nombre d'encoches 13 du stator est égal à trois fois le nombre de pôles du rotor tels que définis ci-dessus.

Les structures 21 et 22 sont séparées les unes des autres par des espaces vides 30, s'étendant sensiblement sur toute la hauteur du rotor (c'est-à-dire sa dimension axiale dans le cas d'un rotor cylindrique).

Bien entendu, on comprend à partir des explications ci-dessus que les différents éléments du rotor peuvent être prévus en N exemplaires disposés en groupes successifs, selon le nombre de pôles souhaité.

On va maintenant décrire en référence aux figures 1a et 1b le comportement d'une machine tournante, en l'espèce un alternateur, dont le principe a été décrit ci-dessus.

On considère tout d'abord le cas où aucun courant d'excitation ne traverse le bobinage d'excitation 214 (figure 1a).

Dans ce cas, une partie, dèsignée par F1, du flux magnétique engendré par un aimant permanent 225 peut circuler en boucle via les pièces asscociées 221 et 222 et le stator 1, autour d'un brin d'induit respectif 14, pour engendrer un courant d'induit minimal dans l'enroulement d'induit considéré.

On notera également qu'un autre partie, désignée par F2, du flux produit collectivement par les aimants suit un trajet sinueux le long du rotor, et ce flux F2 participe également à la génération d'un courant dans les bobinages d'induit.

On réalise dans cette situation une excitation minimale de la machine, correspondant aux flux F1 et F2 engendrés par les aimants 225.

La figure 1b illustre le cas où les bobinages d'excitation 214 du rotor sont traversés par un courant d'excitation.

Chacun de ces bobinages engendre une première partie de flux F3 qui circule en boucle autour d'un brin de bobinage d'induit 14 associé, dans le même sens (en l'espèce de la droite vers la gauche au niveau du stator 1) que le flux F1 engendré par les aimants 225.

Par ailleurs, le flux engendré au niveau des bobinages contribue à renforcer le flux F2 décrit plus haut, pour former un flux F2' plus élevé, qui va contribuer lui aussi à un accroissement du courant d'induit.

On comprend que, lorsque le courant dans les bobinages d'excitation 214 est maximal, on réalise un transfert d'énergie maximal vers le stator.

On réalise ainsi, en contrôlant un courant circulant de façon unidirectionnelle dans les bobinages inducteurs 214 entre une valeur nulle et une valeur maximale, un transfert d'énergie vers le stator qui varie entre une valeur minimale non nulle et une valeur maximale.

Bien entendu, on peut jouer sur le rapport entre ces valeurs minimale et maximale en jouant sur les valeurs de flux magnétiques engendrées respectivement par les aimants 225 et par les bobinages 214.

Ainsi on réalise une machine dans laquelle, en utilisant un courant d'excitation unidirectionnel variant entre zéro et une valeur maximale prédéfinie, on obtient une excitation variant, de façon monotone en fonction du courant, dans une plage donnée.

Il est ainsi possible d'éviter le recours à un pont de commutation électronique en « H » ou analogue destiné, dans les machines à excitation mixte de l'art antérieur, à obtenir un courant bidirectionnel en fonction de l'excitation recherchée. Le coût des moyens de commutation, qui peuvent comprendre un élément de commutation à semi-conducteur unique, est ainsi sensiblement réduit.

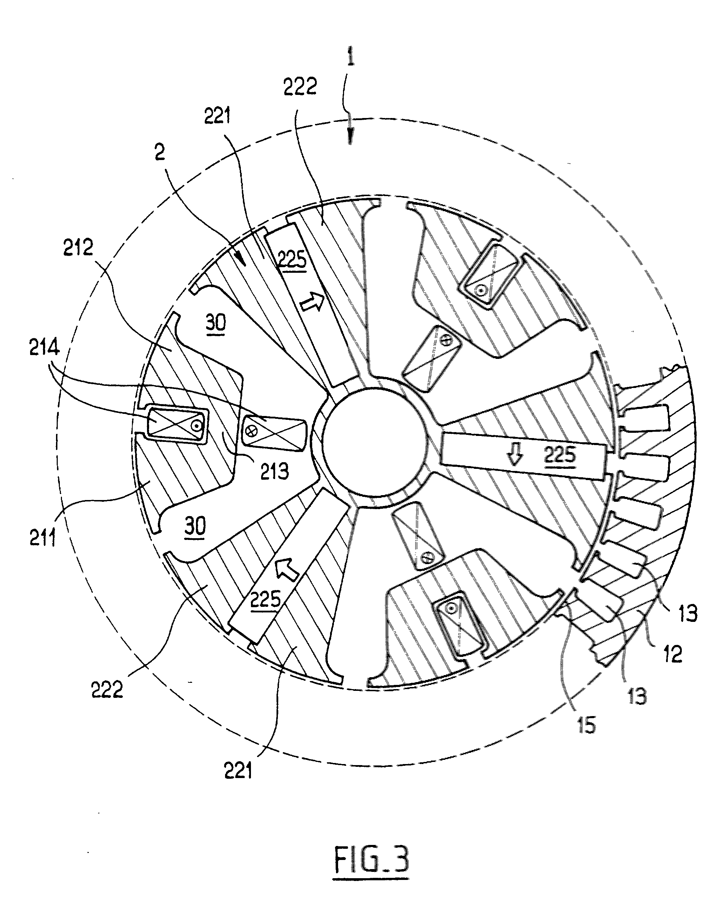

On va maintenant décrire en référence à la figure 2 une autre forme de réalisation d'un ensemble de rotor et de stator selon l'invention.

Elle se distingue de celle des figures 1a et 1b par le fait que chaque structure en « U » 21 comprend non plus un bobinage unique 214, mais deux bobinages 215, 216 entourant respectivement les deux branches 211 et 212 de la pièce en « U ».

On observe à cet égard que la dimension des structures en « U » 21 dans le sens de la hauteur sur la figure 2 (c'est-à-dire dans le sens radial pour un rotor cylindrique) peut être dans ce cas plus importante, l'espace laissé libre pour le brin inférieur des bobinages 214 sur les figures 1a et 1b devenant dans ce cas superflu.

Les bobinages 215 et 216 d'une même cellule sont alimentés, en série ou en parallèle, avec un courant dont le sens est tel que le bobinage 215 engendre un flux magnétique descendant, tandis que le bobinage 216 engendre un flux montant.

Le comportement de cette réalisation en l'absence de courant d'excitation est identique à celui illustré sur la figure 1a, et ne sera pas décrit à nouveau.

Son comportement avec un courant d'excitation est similaire à celui de la figure 1b, et donne lieu aux mêmes types de flux F1, F2' et F3. En outre, on observe que les flux de fuite au niveau des deux bobinages 215, 216, tels que désignés par F4 et F5 respectivement, participent utilement au transfert d'énergie vers le stator, leur trajet passant autour des encoches correspondantes de ce dernier.

On comprend aisément que, dans le cas de la figure 1b, le flux de fuite du bobinage unique 214, qui encercle son brin inférieur, serait perdu.

Cette seconde forme de réalisation permet donc d'accroître le rendement de la machine.

On va maintenant décrire en référence à la figure 3 un exemple de réalisation concrète d'une machine selon l'invention.

Le stator 1 est de type classique en soi, et comporte 36 encoches régulièrement réparties abritant les différents brins de bobinages triphasés, agencés de façon également classique.

Le rotor 2 comporte trois cellules en « U » 21 à bobinage, du type illustré sur les figures 1a et 1b, en alternance avec trois cellules 22 à aimant permanent, de manière à définir un rotor à 12 pôles alternativement N et S.

Les éléments 221, 222 des cellules à aimant sont réunies au niveau d'un noyau central du rotor, et forment ainsi une carcasse unique.

Les pièces en « U » 211, 212, 213 des cellules à bobinages sont quant à elles, sur le plan magnétique, séparées des cellules 22. Dans la pratique, elles peuvent être réunies à la carcasse précitée par des pièces amagnétiques appropriées, non représentées.

Il est à observer à cet égard que la notion d'espace 30 séparant les cellules adjacentes est à comprendre ici comme un espace n'assurant qu'un couplage magnétique extrêmement limité entre lesdites cellules. Il peut ainsi s'agir aussi bien d'un vide d'air que d'un comblement partiel ou total en matériau amagnétique, notamment en matière plastique.

Selon une variante, non représentée, le rotor 2 peut être réalisé par l'assemblage de plusieurs cellules individuelles alternées 21 et 22, par des moyens mécaniques appropriés.

Bien entendu, la présente invention n'est nullement limitée aux formes de rèalisation décrites et représentées, mais l'homme du métier saura y apporter toute variante ou modification conforme à son esprit.

En particulier, on peut prévoir dans le rotor toute combinaison de structures à aimant et de structures à bobinages, et par exemple deux structures à bobinages ou davantage entre chaque paire de structures à aimant, ou au contraire deux structures à aimant ou davantage entre chaque paire de structures à bobinages.

Dans ce cas, les bobinages et les aimants sont orientés de manière à conserver à la périphérie du rotor une alternance de pôles N et S.

On peut enfin prévoir que chaque structure à aimant 22 possède deux aimants ou davantage, dont les flux se combinent pour obtenir l'effet recherché d'un flux créant deux pôles N et S adjacents au niveau du rotor.

## Revendications

1. Machine électrique à commutation de flux, comportant un stator (1) et un rotor (2), le stator comportant au moins un bobinage d'induit (14) logé dans au moins une paire d'encoches (13), le rotor comportant des moyens aptes à sélectivement établir des circuits magnétiques fermés passant autour des brins du ou des bobinages d'induit, **caractérisée en ce que** lesdits moyens comportent au moins un aimant permanent d'excitation (225) apte à établir un flux magnétique dans une direction circonférentielle du rotor, et au moins un bobinage d'excitation (214 ; 215, 216) apte à établir localement un flux magnétique réglable dans la même direction circonférentielle que celle du flux produit par le ou les aimants, **en ce que** le ou chaque aimant est reçu dans une première partie de rotor (22) définissant une première paire de pôles du rotor, **en ce que** le ou les bobinages sont placés dans une seconde partie de rotor (21) définissant une seconde paire de pôles du rotor, et **en ce que** lesdites parties de rotor (22, 21) sont séparées les unes des autres par des zones qui sont essentiellement non magnétiquement conductrices.

2. Machine selon la revendication 1, **caractérisée en ce que** la ou chaque seconde partie (21) de rotor possède une pièce ferromagnétique ayant la forme générale d'un « U » dont deux branches (211, 212) définissent les deux pôles, et recevant au moins un bobinage d'excitation (214 ; 215, 216).

3. Machine électrique selon la revendication 2, **caractérisée en ce que** la ou chaque seconde partie (21) de rotor possède un bobinage d'excitation unique (214) entourant une base (213) de la pièce en « U » réunissant lesdites branches (211, 212) et apte à créer un flux magnétique dans une direction générale circonférentielle de même sens que le flux magnétique engendré par le ou chaque aimant (225).

4. Machine électrique selon la revendication 2, **caractérisée en ce que** la ou chaque seconde partie (21) de rotor possède deux bobinages d'excitation (215, 216) entourant lesdites branches (211, 212) de la pièce en « U » et aptes à créer des flux magnétiques dirigés l'un vers l'intérieur, l'autre vers l'extérieur du rotor (1).

5. Machine électrique selon l'une des revendications 1 à 4, **caractérisée en ce que** le rotor (1) comporte le long de sa périphérie une alternance de premières parties (22) et de secondes parties (21).

6. Machine selon l'une des revendications 1 à 5, **caractérisée en ce que** lesdites premières parties (22) de rotor possèdent chacune deux pièces ferromagnétiques (221, 222) s'étendant de part et d'autre de l'aimant associé (225).

7. Machine selon la revendication 6, **caractérisée en ce que** lesdits pièces ferromagnétiques (221, 222) des premières parties (22) du rotor appartiennent à une carcasse unique.

8. Machine selon l'une des revendications 1 à 7, **caractérisée en ce que** les zones non magnétiquement conductrices sont constituées par des espaces d'air.

9. Machine selon l'une des revendications 1 à 7, **caractérisée en ce que** les zones non magnétiquement conductrices sont constituées par un matériau non magnétiquement conducteur tel qu'une matière plastique.

10. Machine selon l'une des revendications 1 à 7, **caractérisée en ce qu'**elle consiste en un alternateur de véhicule automobile.

## Claims

1. Flux-commutation electric machine, comprising a stator (1) and a rotor (2), the stator comprising at least one armature winding (14) located in at least one pair of recesses (13), the rotor comprising means capable of selectively establishing closed magnetic circuits passing around the strands of the armature winding or windings, **characterized in that** the said means comprise at least one excitation permanent magnet (225) capable of establishing a magnetic flux in a circumferential direction of the rotor, and at least one excitation winding (214; 215, 216) capable of locally establishing a magnetic flux which is adjustable in the same circumferential direction as that of the flux produced by the magnet or magnets, **in that** the magnet or each magnet is received in a first rotor portion (22) defining a first pole pair of the rotor, **in that** the winding or windings is/are placed in a second rotor portion (21) defining a second pole pair of the rotor, and **in that** the said rotor portions (22, 21) are separated from one another by zones which are essentially non-magnetically conductive.

2. Machine according to claim 1, **characterized in that** the second rotor portion (21) or each second rotor portion (21) has a ferromagnetic part, having the general shape of a "U", of which two branches (211, 212) define the two poles, and receiving at least one excitation winding (214; 215, 216).

3. Electric machine according to claim 2, **characterized in that** the second rotor portion (21) or each second rotor portion (21) has a single excitation winding (214) which encompasses a base (213) of the "U"-shaped part joining the said branches (211, 212) and is capable of creating a magnetic flux in a general circumferential direction of the same direction as the magnetic flux generated by the magnet (225) or each magnet (225).

4. Electric machine according to claim 2, **characterized in that** the second rotor portion (21) or each second rotor portion (21) has two excitation windings (215, 216) which encompass the said branches (211, 212) of the "U"-shaped part and are capable of creating magnetic fluxes, one directed towards the inside, and the other directed towards the outside of the rotor (1).

5. Electric machine according to any one of claims 1 to 4, **characterized in that**, along its periphery, the rotor (1) comprises alternating first portions (22) and second portions (21).

6. Machine according to any one of claims 1 to 5, **characterized in that** the said first rotor portions (22) each have two ferromagnetic parts (221, 222) extending on either side of the associated magnet (225).

7. Machine according to claim 6, **characterized in that** the said ferromagnetic parts (221, 222) of the first rotor portions (22) belong to a single frame.

8. Machine according to any one of claims 1 to 7, **characterized in that** the non-magnetically conductive zones consist of air gaps.

9. Machine according to any one of claims 1 to 7, **characterized in that** the non-magnetically conductive zones consist of a non-magnetically conductive material, such as a plastic material.

10. Machine according to any one of claims 1 to 7, **characterized in that** it consists of an automobile vehicle alternator.

## Patentansprüche

1. Elektrische Maschine mit Flußumschaltung die einen Ständer (1) und einen Läufer (2) umfaßt, wobei der Ständer wenigstens eine in wenigstens einem Nutenpaar (13) aufgenommene Ankerspule (14) enthält, während der Läufer Mittel enthält, die in der Lage sind, wahlweise geschlossene Magnetkreise herzustellen, die um Endstücke der Ankerspule oder Ankerspulen verlaufen, **dadurch gekennzeichnet, daß** die besagten Mittel wenigstens einen Erregerpermanentmagneten (225), der in der Lage ist, einen Magnetfluß in einer Umfangsrichtung des Läufers herzustellen, und wenigstens eine Erregerspule (214; 215, 216) umfassen, die in der Lage ist, örtlich einen regelbaren Magnetfluß in der gleichen Umfangsrichtung wie in der des durch den oder die Magneten erzeugten Flusses herzustellen, **daß** der oder jeder Magnet in einem ersten Läuferteil (22) aufgenommen ist, der ein erstes Polpaar des Läufers definiert, **daß** die Spule oder die Spulen in einem zweiten Läuferteil (21) angebracht sind, der ein zweites Polpaar des Läufers definiert, und **daß** die besagten Läuferteile (22, 21) durch Bereiche voneinander getrennt sind, die im wesentlichen nicht magnetisch leitend sind.

2. Maschine nach Anspruch 1, **dadurch gekennzeichnet, daß** der oder jeder zweite Läuferteil (21) ein ferromagnetisches Teil mit der allgemeinen Form eines "U" besitzt, von dem zwei Schenkel (211, 212) die beiden Pole definieren und wenigstens eine Erregerspule (214; 215, 216) aufnehmen.

3. Maschine nach Anspruch 2, **dadurch gekennzeichnet, daß** der oder jeder zweite Läuferteil (21) eine einzige Erregerspule (214) besitzt, die ein Fußstück (213) des "U"-förmigen Teils umgibt, der die besagten Schenkel (211, 212) verbindet, und in der Lage ist, einen Magnetfluß in einer allgemeinen Umfangsrichtung zu erzeugen, die in der gleichen Richtung wie der durch den oder jeden Magneten (225) erzeugte Magnetfluß verläuft.

4. Maschine nach Anspruch 2, **dadurch gekennzeichnet, daß** der oder jeder zweite Läuferteil (21) zwei Erregerwicklungen (215, 216) besitzt, welche die besagten Schenkel (211, 212) des "U"-förmigen Teils umgeben und in der Lage sind, Magnetflüsse zu erzeugen, von denen einer zum Innern und der andere außerhalb des Läufers (1) gerichtet ist.

5. Maschine nach einem der Ansprüche 1 bis 4, **dadurch gekennzeichnet, daß** der Läufer (1) entlang seinem Umfang eine Wechselfolge von ersten Teilen (22) und zweiten Teilen (21) umfaßt.

6. Maschine nach einem der Ansprüche 1 bis 5, **dadurch gekennzeichnet, daß** die besagten ersten Läuferteile (22) jeweils zwei ferromagnetische Teile (221, 222) besitzen, die sich beiderseits des zugehörigen Magneten (225) erstrecken.

7. Maschine nach Anspruch 6, **dadurch gekennzeichnet, daß** die besagten ferromagnetischen Teile (221, 222) der ersten Läuferteile (22) zu einem einzigen Gehäuse gehören.

8. Maschine nach einem der Ansprüche 1 bis 7, **dadurch gekennzeichnet, daß** die nicht magnetisch leitenden Bereiche aus Luftzwischenräumen bestehen.

9. Maschine nach einem der Ansprüche 1 bis 7, **dadurch gekennzeichnet, daß** die nicht magnetisch leitenden Bereiche aus einem nicht magnetisch leitenden Material, wie etwa aus Kunststoff, bestehen.

10. Maschine nach einem der Ansprüche 1 bis 7, **dadurch gekennzeichnet, daß** sie aus einem Wechselstromgenerator für Kraftfahrzeuge besteht.
